# FASCICULE DE BREVET EUROPEEN

(11) **EP 1 149 545 B1**
(45) Date de publication et mention de la délivrance du brevet: **08.12.2004**
(21) Numéro de dépôt: 01400913.8
(22) Date de dépôt: 09.04.2001
(51) Int. Cl.: A47B 95/00, H02B 1/40

(54) **Dispositif de fixation murale pour coffret**
Vorrichtung zur Mauerbefestigung eines Kastens
Device for mural fastening of a box

(30) Priorité: 27.04.2000 FR 0005553
(43) Date de publication de la demande: 31.10.2001
(73) Titulaire: Hispano Mecano Electrica S.A., 08786 Capellades (Barcelona) (ES)
(72) Inventeur: Xaus Regordosa, Lluis, 08700 Igualada-Barcelona (ES)
(74) Mandataire: Saint Martin, René

(56) Documents cités:
- DE-A- 1 901 685
- GB-A- 785 896
- US-A- 3 564 112
- US-A- 4 908 733

## Description

La présente invention concerne un dispositif de fixation murale pour coffret notamment susceptible de loger des appareils électriques et leurs raccordements.

De tels coffrets comprennent généralement une paroi arrière et des parois latérales perpendiculaires à la paroi arrière et formant entre elles des coins à angle droit. Pour fixer le coffret à une paroi telle qu'un mur ou une paroi verticale de support, on prévoit alors plusieurs pattes de fixation dont chacune présente une partie de fixation murale, une partie d'application fixée à la paroi arrière du coffret et une partie intermédiaire de liaison, les parties de fixation et d'application étant parallèles à la paroi arrière du coffret et munies d'orifices respectifs pour le passage d'organes de fixation.

Le document EP 791 991 décrit un dispositif de fixation murale de coffret, doté de pattes de fixation orientables de manière à pouvoir être positionnées verticalement ou horizontalement. Mais ce dispositif ne permet pas de positionner différemment les pattes de fixation et nécessite des formes particulières de la paroi portant les pattes.

Le document GB 785 896 illustre un autre dispositif de fixation murale muni de pattes de fixation orientables, mais avec l'inconvénient de nécessiter des éléments spéciaux d'indexation sur le coffret.

L'invention a pour but de permettre d'orienter les pattes de fixation d'un coffret verticalement, horizontalement ou dans d'autre positions, notamment à 45°, par des dispositions simples et peu onéreuses.

Selon l'invention, la partie intermédiaire de liaison de la patte de fixation comprend une face d'appui propre à s'appliquer dans au moins une position de la patte sur une paroi latérale du coffret, cette face étant perpendiculaire à la paroi arrière du coffret, et une échancrure qui offre des côtés obliques par rapport à la face d'appui et formant entre eux un angle droit, de manière à s'emboîter dans une autre position de la patte sur le coin des parois latérales.

De préférence, la patte de fixation est une pièce métallique pliée en forme de U de façon à présenter la face d'appui et une face frontale parallèle à la paroi arrière, l'échancrure étant formée dans la face frontale et s'ouvrant sur un évidement ménagé dans la face d'appui et encastrable sur le coin. On peut ainsi réaliser une patte de façon très simple et, notamment avec une forme d'échancrure triangulaire, obtenir que la face d'appui coopère avec une paroi latérale du coffret dans deux positions de la patte et que l'échancrure s'emboîte sur le coin dans une troisième position, orientée à 45°, de la patte.

La description va être faite ci-après d'un mode de réalisation non limitatif de l'invention, en regard des dessins annexés.
La figure 1 représente en perspective un coffret muni du dispositif de fixation selon l'invention.
La figure 2 est une vue en perspective à plus grande échelle d'un mode de réalisation préféré d'une patte de fixation.
Les figures 3 et 4 sont respectivement une vue de côté en coupe de la patte et une vue de face de la patte, montée en différentes positions.

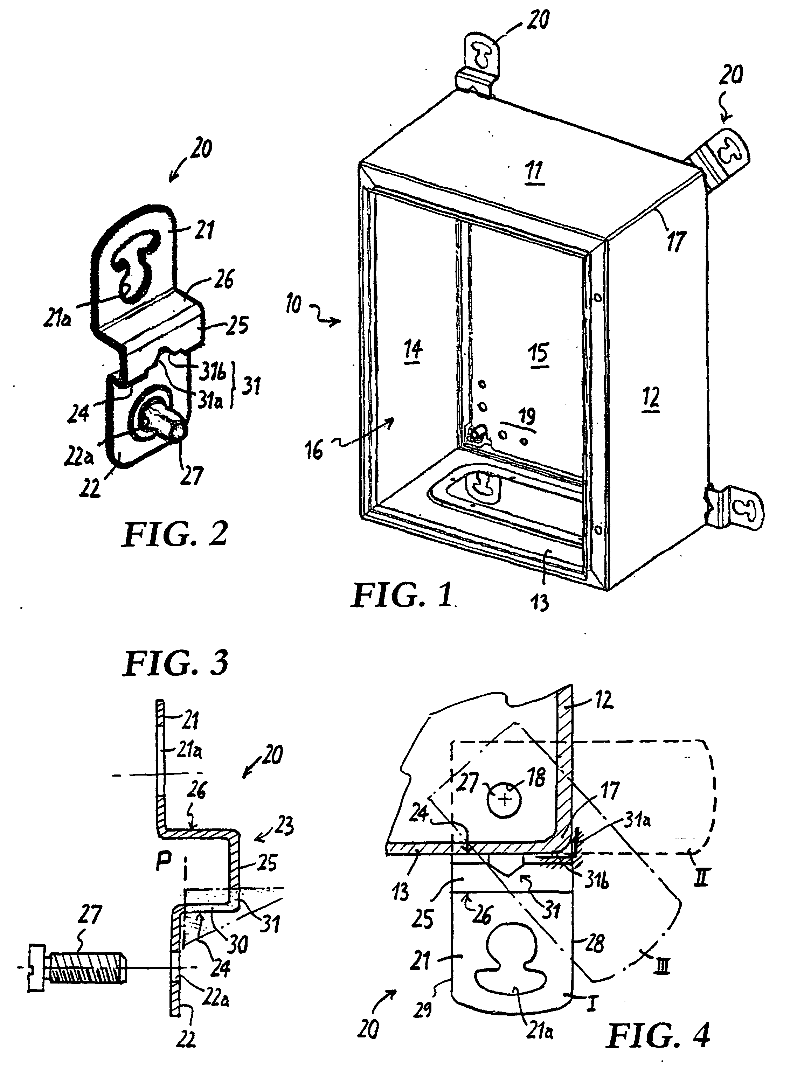

Le coffret 10 illustré sur la figure 1 a une forme prismatique avec des parois latérales 11,12,13,14, planes au moins dans leur partie arrière, et une paroi arrière plane 15 perpendiculaire aux parois latérales. Une ouverture 16 est ménagée à l'avant du coffret pour être obturée par une porte ou un couvercle non représenté. Pour fixer l'arrière du coffret 10 à un mur ou autre paroi verticale, on lui adjoint au moins deux, par exemple quatre, pattes de fixation 20. Chaque patte est située près d'un coin 17 formé par la jonction des parois latérales du coffret et est montée de manière à pouvoir être orientée dans plusieurs positions, de préférence trois positions, comme illustré sur la figure 4, sans nécessiter de modification ni d'adjonction particulière sur le coffret.

La patte 20 est une pièce métallique unique et rigide, découpée et pliée. Elle pourrait aussi être moulée dans une forme d'exécution moins simple. La patte présente vers une extrémité une partie 21 de fixation murale, vers l'autre extrémité une partie 22 d'application à la paroi arrière du coffret et une partie intermédiaire 23 assurant la liaison entre les deux parties 21,22. Les parties 21,22 sont parallèles au plan P de la paroi arrière 15 du coffret, ci-après désigné simplement "plan arrière", et la partie de liaison 23 est en forme de U présentant successivement, de la partie 22 vers la partie 21, une face d'appui 24, une face frontale 25 et une face de raccordement 26.

Les faces 24,26 de la patte 20 sont perpendiculaires au plan P de la paroi arrière 15 et la face 25 lui est parallèle. Dans les parties 21,22 sont ménagés des orifices respectifs de passage 21a,22a pour des moyens de fixation au support et au coffre, tels qu'une vis ou un goujon 27 (voir figure 3). La face d'appui 24 ménage un appui (horizontal sur la figure 3, mais qui peut aussi être vertical) sur la paroi latérale associée, et elle comporte un évidement 30 qui se poursuit par une échancrure 31 de la face frontale 25. Dans la forme d'exécution illustrée, l'échancrure 31 a une forme générale triangulaire de manière à offrir deux côtés obliques 31a,31b qui peuvent s'emboîter sur les faces du coin 17 constitué par la réunion des parois latérales.

On a représenté figure 4 les trois positions possibles pour la patte 20, qui est ici la patte inférieure droite : position verticale I (en traits pleins), position horizontale II (en tirets) et position à 45° III (en tirets). Dans les positions I et II, les grands côtés 28 et respectivement 29 de la patte sont sensiblement dans l'alignement des parois latérales 12, respectivement 13, du coffret, et ne dépassent pas de son gabarit, tandis que la face d'appui 24 est appliquée sur la paroi latérale 13, respectivement 12. Dans la position III, la patte est emboîtée par les côtés 31a,31b de l'échancrure 31 et par les côtés de l'évidement 30 sur le coin 17, ou en d'autres termes sur le dièdre formé à cet endroit par les parois latérales. Dans les trois positions, la vis 27 est engagée dans un trou correspondant 18 de la paroi arrière 15 du coffret, ce trou étant disposé de manière symétrique par rapport aux parois latérales 12,13 formant le coin. Le coffret ainsi réalisé permet une grande souplesse de positionnement sur le mur ou la paroi qui est destiné à le porter. La patte 20 peut aussi être fixée par engagement de la vis 27 dans d'autres trous 19 de la paroi, situés comme le trou 18 à la même distance de la paroi sur laquelle s'applique la face d'appui.

## Revendications

1. Dispositif de fixation murale pour coffret notamment destiné à loger des appareils électriques et doté d'une paroi arrière (15) et de parois latérales (11-14) formant entre elles des coins (17) à angle droit, le dispositif comprenant plusieurs pattes de fixation (20) dont chacune présente une partie (21) de fixation murale, une partie (22) d'application à la paroi arrière (15) du coffret et une partie intermédiaire (23) de liaison, les parties de fixation (21) et d'application (22) étant dans l'ensemble parallèles à la paroi arrière (15),
***caractérisé par le fait que*** la partie intermédiaire de liaison (23) de la patte de fixation (20) comprend :
- une face d'appui (24) propre à s'appliquer dans au moins une position de la patte (20) sur une paroi latérale (11-14) du coffret, cette face étant perpendiculaire à la paroi arrière (15) du coffret,
- une échancrure (31) qui offre des côtés (31 a,31 b) obliques par rapport à la face d'appui (24) et formant entre eux un angle droit, de manière à s'emboîter dans une autre position de la patte (20) sur le coin (17) des parois latérales (11, 12, 13, 14).

2. Dispositif de fixation selon la revendication 1, **caractérisé par le fait que** la patte de fixation (20) est une pièce métallique pliée en forme de U de façon à présenter la face d'appui (24) et une face frontale (25) parallèle à la paroi arrière (15), l'échancrure (31) étant formée dans la face frontale (25) et s'ouvrant sur un évidement (30) ménagé dans la face d'appui (24) et encastrable sur le coin.

3. Dispositif de fixation selon la revendication 2, **caractérisé par le fait que** la face frontale (25) est reliée à la partie (21) de fixation murale par une face de raccordement (26) parallèle à la face d'appui (24).

4. Dispositif de fixation selon la revendication 1, **caractérisé par le fait que** l'échancrure (31) est triangulaire, la face d'appui coopérant avec une paroi latérale du coffret dans deux positions (I,II) de la patte (20) et l'échancrure s'emboîtant sur le coin dans la troisième position à 45° (III) de la patte (20).

## Patentansprüche

1. Vorrichtung zur Wandanbringung von Abdeckungskästen, die insbesondere dazu dienen, elektrische Geräte zu beherbergen und über eine Rückwand (15) und Seitenwände (11-14), die untereinander rechtwinklig aufeinander stoßende Ecken (17) bilden, verfügen, wobei die Vorrichtung aus mehreren Verbindungsplatten (20) besteht, die jeweils aus einem Teilstück (21) zur Anbringung an die Wand, einem Teilstück (22) zur Befestigung an der Rückwand (15) des Abdeckungskastens und einem mittleren Verbindungsstück (23) bestehen, wobei die Teilstücken zur Anbringung (21) und zur Befestigung (22) vollständig parallel zur Rückwand (15) sind, ***dadurch gekennzeichnet, dass*** das mittlere Verbindungsstück (23) der Verbindungsplatte (20) besteht aus:
- einer Stützfläche (24), die, in mindestens einer Stellung der Verbindungsplatte (20) zur Abstützung einer Seitenwand (11-14) des Abdeckungskastens dient, wobei diese Fläche rechtwinklig zur Rückwand des Abdeckungskastens (15) ist,
- einem Ausschnitt (31) mit, bezogen auf die Stützfläche(24), schrägen Kanten (31a,31b), die zueinander einen rechten Winkel formen, derart, dass sie in einer anderen Stellung der Verbindungsplatte (20) auf die Ecke (17) der Seitenwände (11,12,13,14) aufsetzbar ist.

2. Vorrichtung zur Anbringung nach Patentanspruch 1,
**dadurch gekennzeichnet, dass** die Verbindungsplatte (20) ein, in Form eines U-Stückes gebogenes, Metallteil ist, derart, dass es die Stützfläche (24) und eine zur Rückwand (15) parallele Vorderseite (25) aufweist, wobei der Ausschnitt (31) in der Vorderseite (25) geformt ist und in eine in die Stützfläche (24) eingearbeite Aussparung (30) übergeht und auf die Ecke aufsetzbar ist.

3. Vorrichtung zur Anbringung nach Patentanspruch 2,
**dadurch gekennzeichnet, dass** die Vorderseite (25) mit dem Teilstück (21) zur Wandanbringung über eine Verbindungssfläche (26) verbunden ist, die parallel zur Stützfläche (24) ist.

4. Vorrichtung zur Anbringung nach Patentanspruch 1, **dadurch gekennzeichnet, dass** der Ausschnitt (31) dreieckig ist, wobei, die Stützfläche mit einer Seitenfläche des Abdeckungskastens in zwei Stellungen (I,II) der Platte (20) zusammenwirkt und der Ausschnitt in einer dritten Stellung im 45°-Winkel (III) der Platte (20), auf die Ecke aufsetzbar ist.

## Claims

1. Wall mounting device for cabinets particularly intended to house electrical appliances and equipped with a rear surface (15) and lateral surfaces (11-14) forming right-angled corners together, the device comprising several mounting lugs (20), each comprising a wall mounting part (21), an application part (22) to the rear surface (15) of the cabinet and an intermediate connection part (23), the mounting parts (21) and application parts (22) being overall parallel with the rear surface (15),
**characterised in that** the intermediate connection part (23) of the mounting lug (20) comprises:
- a bearing face (24) designed to be applied in at least one position of the lug (20) on a lateral surface (11-14) of the cabinet, said bearing face being perpendicular to the rear surface (15) of the cabinet,
- a notch (31) which offers oblique sides (31a, 31b) with respect to the bearing face (24) and forming a right angle together, so as to fit together in another position of the lug (20) on the corner (17) of the lateral surfaces (11, 12, 13, 14).

2. Mounting device according to claim 1, **characterised in that** the mounting lug (20) is a U-shaped bent metal part so as to comprise the bearing face (24) and a frontal face (25) parallel with the rear surface (15), the notch (31) being formed in the frontal face (25) and opening onto a recess (30) provided in the bearing face (24) that can be flush-mounted onto the corner.

3. Mounting device according to claim 2, **characterised in that** the frontal face (25) is connected to the wall mounting part (21) by a connection face (26) parallel with the bearing face (24).

4. Mounting device according to claim 1, **characterised in that** the notch (31) is triangular, the bearing face cooperating with a lateral surface of the cabinet in two positions (I, II) of the lug (20) and the notch fitting onto the corner in the third position at 45° (III) of the lug (20).
